# FASCICULE DE BREVET EUROPEEN

(11) **EP 2 633 168 B1**
(45) Date de publication et mention de la délivrance du brevet: **24.09.2014**
(21) Numéro de dépôt: 11831831.0
(22) Date de dépôt: 14.10.2011
(51) Int. Cl.: F02C 9/26

(54) **COMMANDE D'UN DISPOSITIF DE DOSAGE DE CARBURANT POUR TURBOMACHINE.**
STEUERUNG EINER BRENNSTOFFZUMESSVORRICHTUNG FÜR EINE TURBOMASCHINE
CONTROL OF A FUEL METERING DEVICE FOR TURBOMACHINE

(30) Priorité: 25.10.2010 FR 1058716
(43) Date de publication de la demande: 04.09.2013
(73) Titulaire: Snecma, 75015 Paris (FR)
(72) Inventeur: GAULLY, Bruno, Robert, F-91630 Marolles en Hurepoix (FR); MAROT, Cécile, F-56270 Ploemeur (FR)
(74) Mandataire: David, Alain
(86) Numéro de dépôt international: PCT/FR2011/052395
(87) Numéro de publication internationale: WO 2012/056142

(56) Documents cités:
- EP-A1- 0 122 100
- EP-A2- 0 273 848
- US-A- 4 809 499
- US-A- 5 305 597

## Description

### Arrière-plan de l'invention

L'invention concerne le domaine général des turbomachines. En particulier, l'invention concerne la commande du débit de carburant d'une turbomachine. Elle s'applique de manière privilégiée mais non limitative aux turbomachines utilisées dans le domaine de l'aéronautique.

De façon connue, le débit de carburant injecté dans la chambre de combustion d'une turbomachine est déterminé par un dispositif de dosage muni d'un tiroir, aussi appelé vanne de dosage (FMV pour *« Fuel Metering Valve* »)*.* Le débit de carburant dépend de la position du tiroir.

Une consigne de débit massique de carburant devant être injecté dans la chambre de combustion est évaluée par le calculateur de la turbomachine. Une technique classiquement utilisée pour commander la position du tiroir à partir de la consigne de débit massique fournie par le calculateur est la suivante.

En se déplaçant, le tiroir fait varier une section S de passage du carburant dans le dispositif de dosage. La section S est aussi appelée surface d'ouverture du dispositif de dosage et s'exprime aisément en fonction de la position du tiroir. De façon connue, cette section S est proportionnelle au débit volumique de carburant lorsque la différence de pression de part et d'autre du dispositif de dosage est maintenue constante. Le débit volumique est égal au débit massique divisé par la densité volumique du carburant. La densité volumique du carburant est généralement supposée constante tout au long de la mission de la turbomachine, et prédéterminée.

Il est donc possible de convertir la consigne de débit massique de carburant en une consigne de position du tiroir.

Une boucle de régulation compare alors la consigne de position du tiroir avec la position réelle du tiroir, mesurée par un capteur, et détermine un signal de commande du tiroir.

La technique de commande précitée présente plusieurs inconvénients. D'une part, elle ne tient pas compte d'une variation possible de la nature du carburant utilisé, ni d'une éventuelle variation de la densité volumique du carburant, par exemple suite à une variation de température. D'autre part, le dispositif de dosage est généralement peu précis.

Il en résulte que le débit massique de carburant effectivement injecté peut être différent de la consigne de débit massique. Autrement dit, la commande peut être imprécise.

Il est également connu d'utiliser un débitmètre dans le circuit de carburant, afin d'améliorer la précision de la commande.

Par exemple, le document US 5,305,597 propose d'évaluer, à partir d'une mesure délivrée par un débitmètre, un signal de calibration proportionnel à la densité volumique instantanée du carburant.

Ce document propose aussi d'utiliser un critère de précision pour vérifier la validité de la mesure délivrée par le débitmètre. Plus précisément, la mesure délivrée par le débitmètre est considérée valide lorsqu'elle est constante et supérieure à un seuil prédéterminé pendant une période déterminée. Lorsque la mesure n'est pas considérée valide, la dernière valeur considérée valide est utilisée pour déterminer le signal de calibration.

Cependant, un débitmètre est susceptible d'être affecté par différents types de pannes. Le critère de précision utilisé par le document précité ne permet pas de détecter tout type de panne ni d'adapter la commande du débit de carburant en fonction d'une panne détectée. Ainsi, il n'offre pas une précision satisfaisante en cas de panne du débitmètre.

Il existe donc un besoin d'améliorer la précision de la commande du débit de carburant d'une turbomachine.

### Objet et résumé de l'invention

L'invention propose un procédé de commande de la position d'un tiroir d'un dispositif de dosage de carburant pour turbomachine en fonction d'une consigne de débit massique, comprenant :
- une étape d'obtention d'un signal de position provenant d'un capteur apte à mesurer la position du tiroir,
- une étape d'obtention d'au moins un signal de mesure provenant d'un débitmètre apte à mesurer un débit de carburant dans le dispositif de dosage,
- une étape d'estimation d'au moins un critère de validité dudit au moins un signal de mesure,
- une étape de détermination du débit massique de carburant dans le dispositif de dosage, et
- une étape de commande de la position du tiroir en fonction du débit massique déterminé et de la consigne de débit massique,
   caractérisé en ce que :
- ledit au moins un signal de mesure comprend un premier et un deuxième signal de mesure de la température du carburant, un premier et un deuxième signal de mesure de la permittivité du carburant, et un premier et un deuxième signal de mesure du débit volumique du carburant, et
- l'étape de détermination comprend la sélection, en fonction dudit au moins un critère de validité, d'un débit massique parmi :
   - un débit massique calculé en fonction du signal de position,
   - un débit massique calculé en fonction du signal de position et d'au moins un desdits signaux de mesure de la température,
   - un débit massique calculé en fonction du signal de position et d'au moins un desdits signaux de mesure de la permittivité,
   - un débit massique calculé en fonction du signal de position, d'au moins un desdits signaux de mesure de la température et d'au moins un desdits signaux de mesure de la permittivité, et
   - un débit massique calculé en fonction d'au moins un desdits signaux de mesure de la température, d'au moins un desdits signaux de mesure de la permittivité, et d'au moins un desdits signaux de mesure du débit volumique.

Autrement dit, l'invention propose de détecter une éventuelle panne du débitmètre par l'estimation d'au moins un critère de validité, et de sélectionner un débit massique en fonction du critère de validité. Cela permet de sélectionner le débit massique le plus précis possible, compte tenu d'éventuelles pannes du débitmètre. L'invention permet donc d'améliorer la précision de la commande, même en cas de panne du débitmètre.

Le critère de validité peut comprendre un critère de validité d'une mesure de température, un critère de validité d'une mesure de permittivité, et un critère de validité d'une mesure de débit volumique.

Par exemple, si le critère de validité de la mesure de température indique que la mesure de la température est valide, le critère de validité de la mesure de permittivité indique que la mesure de la permittivité est valide, et le critère de validité de la mesure de débit volumique indique que la mesure du débit volumique est invalide, le procédé de commande peut sélectionner le débit massique calculé en fonction du signal de position, d'au moins un desdits signal de mesure de la température et d'au moins un desdits signal de mesure de la permittivité, qui est le plus précis dans ce cas. De manière générale, pour chaque combinaison des critères de validité, l'un des débits massiques calculés est le plus précis et peut être sélectionné.

Le critère de validité peut comprendre en outre un critère secondaire de validité d'une mesure de débit volumique, estimé en comparant d'une part le débit massique calculé en fonction d'au moins un desdits signaux de mesure de la température, d'au moins un desdits signaux de mesure de la permittivité, et d'au moins un desdits signaux de mesure du débit volumique et d'autre part le débit massique calculé en fonction du signal de position, d'au moins un desdits signaux de mesure de la température et d'au moins un desdits signaux de mesure de la permittivité.

Dans le cas d'un débitmètre à hélice, l'hélice n'est généralement pas redondée. Cette comparaison permet de détecter un défaut affectant l'hélice et d'en tenir compte dans la détermination du débit massique.

Par ailleurs, les caractéristiques suivantes, prises seules ou en combinaison, permettent une consolidation efficace et fiable des mesures :
- le critère de validité d'une mesure de température est déterminé en comparant les premier et deuxième signaux de mesure de température avec une plage de mesure de température,
- le critère de validité d'une mesure de permittivité est déterminé en comparant les premier et deuxième signaux de mesure de permittivité avec une plage de mesure de permittivité,
- le critère de validité d'une mesure de température et le critère de validité d'une mesure de permittivité sont déterminés en outre en fonction d'un ensemble de données représentant la densité d'un carburant en fonction d'une température et d'une permittivité,
- lorsque la plage de mesure de température, respectivement de permittivité, et l'ensemble de données n'indiquent pas que les premier et deuxième signaux de mesure de température, respectivement de permittivité, sont invalides, le critère de validité d'une mesure de température, respectivement de permittivité, est déterminé en outre en fonction d'un écart entre le premier et le deuxième signal de mesure de température, respectivement de permittivité
- le critère de validité d'une mesure de débit volumique est déterminé en comparant les premier et deuxième signaux de mesure de débit volumique avec une plage de mesure de débit volumique,
- le critère de validité d'une mesure de débit volumique est déterminé en outre en fonction d'un écart entre le premier et le deuxième signal de mesure de débit volumique.

L'invention fournit également un programme d'ordinateur comprenant des instructions pour l'exécution d'un procédé de commande conforme à l'invention lorsque le programme est exécuté par un ordinateur.

L'invention propose aussi une unité électronique pour la commande d'une turbomachine, ladite unité électronique comprenant une mémoire contenant un programme d'ordinateur conforme à l'invention.

Cette unité électronique peut être par exemple le calculateur de la turbomachine ou une unité spécifique à la commande du débit de carburant.

L'invention concerne également un moteur d'aéronef comprenant une turbomachine et une unité électronique conforme à l'invention.

### Brève description des dessins

L'invention sera mieux comprise à la lecture de la description faite ci-après, à titre indicatif mais non limitatif, en référence aux dessins annexés sur lesquels :
- la figure 1 est un schéma du circuit d'alimentation en carburant d'une turbomachine et de l'unité électronique de commande de la turbomachine ;
- la figure 2 est un schéma représentant une partie du fonctionnement d'un procédé de commande selon un mode de réalisation de l'invention ; et
- la figure 3 représente de manière plus détaillée une partie de l'étape de sélection du procédé de commande de la figure 2.

### Description détaillée de modes de réalisation

L'invention sera décrite ci-après dans le cadre de son application à une turbomachine qui peut être par exemple une turbomachine de moteur de propulsion pour avion, une turbine d'hélicoptère, une turbine industrielle ou une turbine de groupe auxiliaire de puissance (APU).

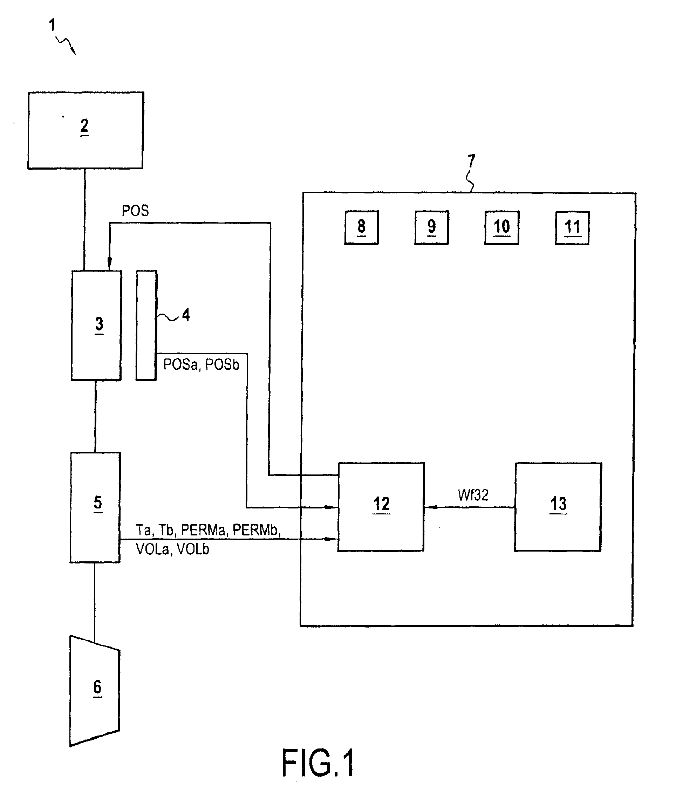

La figure 1 représente un circuit d'alimentation 1 en carburant d'une turbomachine, et l'unité électronique de commande 7 de la turbomachine.

Le circuit d'alimentation en carburant 1 comprend un réservoir 2, un dispositif de dosage 3, un capteur de position 4 et un débitmètre 5. Il est destiné à alimenter en carburant la chambre de combustion 6 de la turbomachine.

Le dispositif de dosage 3, aussi communément appelé « doseur », permet de régler la quantité de carburant fournie par circuit d'alimentation 1 à la chambre de combustion 6. A cette fin, le dispositif de dosage 3 est muni d'un tiroir (non représenté) ou vanne de dosage (FMV pour « *Fuel Metering Valve* » en anglais). La section de passage du carburant, notée S, aussi appelée surface d'ouverture du dispositif de dosage, dépend de la position du tiroir.

Un organe (non représenté) maintient constante la différence de pression de part et d'autre du tiroir et le débit volumique de carburant est donc proportionnel à section S. On notera que la relation entre la section S et la position du tiroir est connue en soi et ne sera pas détaillée davantage.

Le capteur de position 4 mesure la position du tiroir du dispositif de dosage 3 et fournit un signal de position à l'unité électronique de commande 7. Il s'agit par exemple d'un capteur de type LVDT (« *Linear Variable Differential Transformer*»)*.* Le capteur de position 4 peut être doublé et fournir deux signaux de position POSa et POSb à l'unité électronique de commande 7.

Le débitmètre 5 est par exemple un couple mètre, un débitmètre à hélice ou un débitmètre volumique associé à une mesure de densité, la densité étant déterminée en fonction de la température et de la permittivité. Ainsi, le débitmètre 5 fournit plusieurs signaux de mesure à l'unité électronique de commande 7 : un signal de température Ta et un signal de température Tb, représentatifs de la température du carburant dans le circuit d'alimentation 1 ; un signal de permittivité PERMa et un signal de permittivité PERMb représentatifs de la permittivité du carburant dans le circuit d'alimentation 1 ; et un signal de débit volumique VOLa et un signal de débit volumique VOLb représentatifs du débit volumique de carburant.

Ci-après, on désigne par Ta, Tb, PERMa,... le signal de mesure lui-même ou la valeur correspondante à ce signal de mesure. Par exemple, Ta peut également désigner la température représentée par le signal de mesure Ta. De même, POSa et POSb peuvent désigner les positions représentées par les signaux de positions POSa et POSb.

Le débitmètre 5 est avantageusement placé au plus près du dispositif de dosage 3 pour que les températures Ta et Tb et les permittivités PERMa et PERMb correspondent respectivement à la température et à la permittivité du carburant dans le dispositif de dosage 3.

L'unité électronique de commande 7 présente l'architecture matérielle d'un ordinateur. Elle comprend notamment un processeur 8, une mémoire morte 9, une mémoire vive 10 et une interface 11. Le processeur 8 permet d'exécuter des programmes d'ordinateurs mémorisés dans la mémoire morte 9 en utilisant la mémoire vive 10. L'interface 11 permet notamment d'obtenir des signaux de mesure et d'émettre des signaux de commande.

L'unité électronique de commande 7 met en oeuvre un procédé de commande de la position du tiroir du dispositif de dosage 3. Ce procédé de commande peut être mis en oeuvre par un programme d'ordinateur 12 mémorisé dans la mémoire morte 9 et exécuté par le processeur 8. Le procédé de commande vise à déterminer une consigne de position POS pour le tiroir du dispositif de dosage 3, en fonction d'une consigne de débit massique Wf32 de carburant pour l'alimentation de la chambre de combustion 6 ainsi que des signaux de position POSa, POSb et des signaux de mesure Ta, Tb, PERMa, PERMb, VOLa et VOLb.

Dans l'exemple représenté sur la figure 1, l'unité électronique de commande 7 est le calculateur de la turbomachine, et met en oeuvre un boucle de régulation principale destinée à déterminer la consigne de débit massique Wf32, en fonction de la poussée souhaitée. La boucle de régulation principale est mise en oeuvre par un programme d'ordinateur 13 mémorisé dans la mémoire morte 9 et exécuté par le processeur 8.

En variante, l'unité électronique de commande 7 peut être une unité électronique spécifique à la commande du dispositif de dosage 3, et recevoir la consigne de débit massique Wf32 depuis le calculateur de la turbomachine qui est alors une unité distincte.

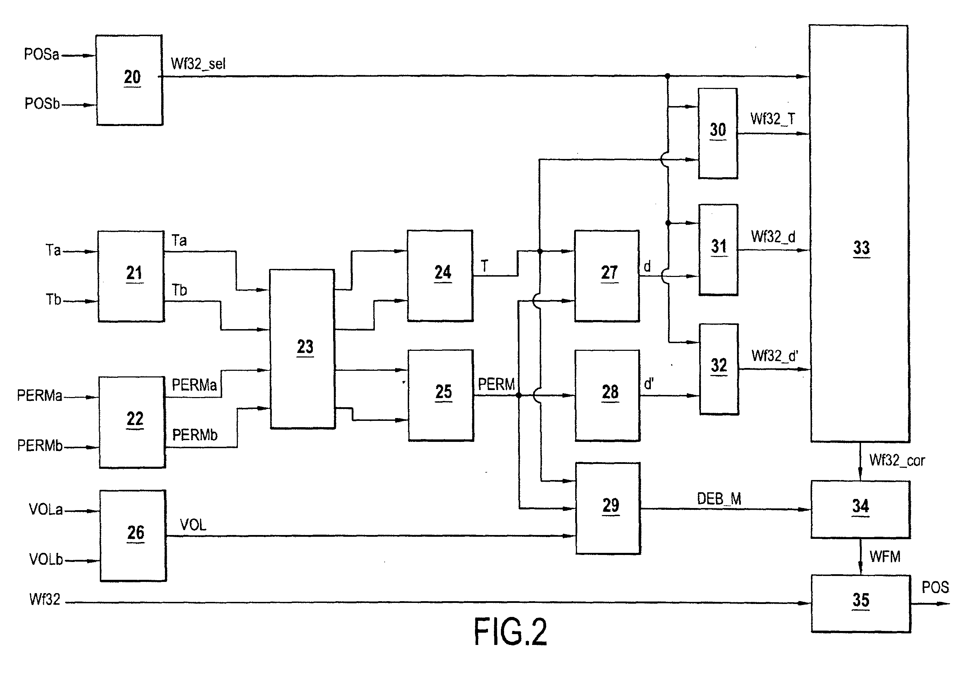

La figure 2 représente, sous forme de modules fonctionnels, les principales étapes du procédé de commande de la position du tiroir du dispositif de dosage 3. Comme expliqué précédemment, ce procédé de commande peut être mis en oeuvre par un programme d'ordinateur 12 exécuté par l'unité électronique de commande 7.

Le module 20 détermine, à partir des positions POSa et POSb, un débit massique Wf32_sel. La détermination du débit massique Wf32_sel est réalisée en supposant la densité du carburant constante et prédéterminée. Le calcul de Wf32_sel à partir des positions POSa et POSb est connu de l'homme du métier et ne sera pas décrit plus en détail.

Le module 21 effectue une première consolidation des températures Ta et Tb. Plus précisément, le module 21 vérifie que Ta et Tb sont dans la plage de mesure de température, par exemple dans la plage [-55 °C ; 150°C]. Si la température Ta, respectivement Tb, n'est pas dans la plage de mesure de température, la mesure de Ta, respectivement de Tb, est considérée invalide. Cette information est mémorisée.

De manière correspondante, le module 22 effectue une première consolidation des permittivités PERMa et PERMb en vérifiant que PERMa et PERMb sont dans la plage de mesure de permittivité, par exemple dans la plage [1,88 ; 2,27]. Si PERMa, respectivement PERMb, n'est pas dans la plage de mesure de permittivité, la mesure de PERMa, respectivement de PERMb, est considérée invalide. Cette information est mémorisée.

Le module 23 effectue une consolidation croisée des températures Ta et Tb et des permittivités PERMa et PERMb.

De manière connue, la densité d'un carburant évolue avec sa température. Par ailleurs, pour une température donnée, la permittivité d'un carburant dépend du type de carburant. Il est donc possible de construire un ensemble de données, par exemple une table 2D, indiquant, pour une température et une permittivité donnée, soit la densité du carburant correspondant, soit que le couple température/permittivité ne correspond pas à un carburant.

Ainsi, le module 23 utilise un tel ensemble de données pour éliminer des couples température/permittivité ne correspondant pas à un carburant. Si des températures et des permittivités sont considérées invalides, cette information est mémorisée.

Ensuite, le module 24 effectue une seconde consolidation des températures Ta et Tb, si elles sont toujours considérées valides après les consolidations effectuées par les modules 21 et 23. Plus précisément, le module 24 vérifie que l'écart entre Ta et Tb est inférieur à un seuil prédéterminé, par exemple 0.25°C.

Si l'écart entre Ta et Tb est supérieure à ce seuil, ou si ni Ta ni Tb n'était considéré valide après les consolidations effectuées par les modules 21 et 23, l'information « température invalide » est mémorisée et le module 24 ne fournit aucune température.

Par contre, si l'écart entre Ta et Tb est inférieur ou égal à ce seuil, ou si une seule des températures Ta et Tb était considéré valide après les consolidations effectuées par les modules 21 et 23, l'information « température valide » est mémorisée et le module 24 fournit une température T qui est :
- La moyenne de Ta et Tb si Ta et Tb sont considérées valides.
- Ta si seule Ta est considérée valide et Tb invalide.
- Tb si seule Tb est considérée valide et Ta invalide.

Le module 25 effectue un traitement similaire au module 24 pour les permittivités PERMa et PERMb. Ainsi, le module 25 mémorise une information « permittivité invalide » ou « permittivité valide » et, dans le deuxième cas, fournit une permittivité PERM qui peut être la moyenne de PERMa et PERMb ou l'une des permittivités PERMa et PERMb.

Le module 26 effectue une consolidation des débits volumiques VOLa et VOLB. Plus précisément, le module 26 vérifie que VOLa et VOLb sont dans la plage de mesure de débit volumique du débitmètre 5. Si le débit VOLa, respectivement VOLb, n'est pas dans la plage de mesure de débit volumique, la mesure de VOLa, respectivement de VOLb, est considérée invalide. Cette information est mémorisée. Si VOLa et VOLb sont considérées valides, le module 26 vérifie également que l'écart entre VOLa et VOLb est inférieur à un seuil prédéterminé.

Si l'écart entre VOLa et VOLb est supérieur à ce seuil, ou si ni VOLa ni VOLb n'était considéré valide après la vérification par la plage de mesure, l'information « débit volumique invalide » est mémorisée et le module 26 ne fournit aucun débit volumique.

Par contre, si l'écart entre VOLa et VOLb est inférieur ou égal à ce seuil, ou si un seul des débits VOLa et VOLb était considéré valide après la vérification par la plage de mesure, l'information « débit volumique valide » est mémorisée et le module 26 fournit un débit volumique VOL qui est :
- La moyenne de VOLa et VOLb si VOLa et VOLb sont considérées valides.
- VOLa si seul VOLa est considérée valide et VOLb invalide.
- VOLb si seul VOLb est considérée valide et VOLa invalide.

Le module 27 détermine, à partir de la température T fournie par le module 24 et de la permittivité PERM fournie par le module 25, la densité d du carburant.

Le module 28 détermine, à partir de la permittivité PERM fournie par le module 25, une estimation d' de la densité d du carburant.

Le module 29 détermine, à partir de la température T fournie par le module 24, de la permittivité PERM fournie par le module 25 et du débit volumique VOL fournit par le module 26, un débit massique DEB_M.

Le module 30 détermine, à partir du débit massique Wf32_sel fourni par le module 20 et de la température T fournie par le module 24, un débit massique Wf32_T corrigé en température.

Le module 31 détermine, à partir du débit massique Wf32_sel fourni par le module 20 et de la densité d fournie par le module 27, un débit massique Wf32_d corrigé en densité.

Le module 32 détermine, à partir du débit massique Wf32_sel fourni par le module 20 et de l'estimation d' de la densité fournie par le module 28, un débit massique Wf32_d' corrigé en permittivité.

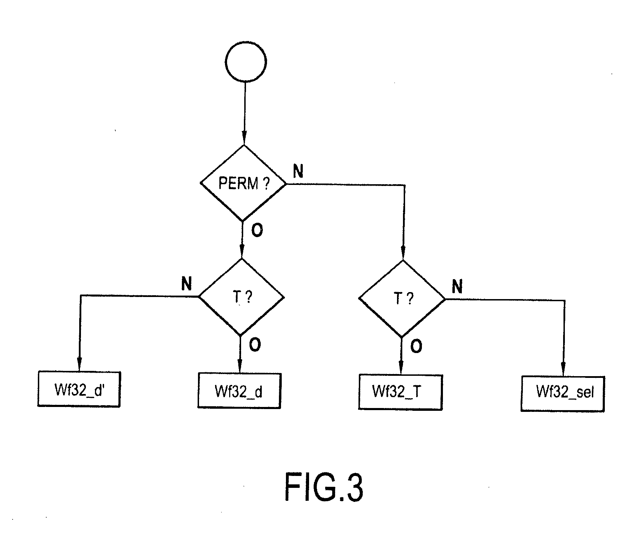

Le module 33 sélectionne un débit massique Wf32_cor parmi les débits massique Wf32_sel, Wf32_T, Wf32_d et Wf32_d', en fonction de la validité des mesures de température et de permittivité, déterminée par les modules 21 à 25. La figure 3 représente la sélection effectuée par le module 33 de manière plus détaillée :
- Si la permittivité est valide et la température invalide, le module 33 sélectionne le débit massique Wf32_d'.
- Si la permittivité et la température sont valides, le module 33 sélectionne le débit massique Wf32_d.
- Si la permittivité est invalide et la température valide, le module 33 sélectionne le débit massique Wf32_T.
- Si la permittivité et la température sont invalides, le module 33 sélectionne le débit massique Wf32_sel.

Comme expliqué précédemment, les informations « température valide » ou « température invalide » et « permittivité valide » ou « permittivité invalide » utilisées par le module 33 sont déterminées et mémorisées par les modules 24 et 25.

Le module 34 fournit un débit massique WFM en sélectionnant parmi le débit massique DEB_M fourni par le module 29 et le débit massique WF32_cor fourni par le module 33.

Plus précisément, si les informations « température valide », « permittivité valide » et « débit volumique valide » sont mémorisées, cela signifie que le débit massique DEB_M, qui est le débit déterminé en fonction des mesures du débitmètre 5, n'est pas affecté par une panne et représente la mesure la plus précise disponible. Dans ce cas, le débit massique WFM fourni est égal à DEB_M. Dans une variante, si les informations « température valide », « permittivité valide » et « débit volumique valide » sont mémorisées, le module 34 calcule l'écart entre DEB_M et Wf32_d. Si cet écart est supérieur à un seuil prédéterminé, cela indique un problème de mesure de débit volumique, par exemple un problème affectant l'hélice dans le cas d'un débitmètre à hélice. Dans ce cas, le module 34 sélectionne le débit massique Wf32_d à la place du débit massique DEB_M.

Par contre, si au moins une des informations « température invalide », « permittivité invalide » et « débit volumique invalide » est mémorisée, cela signifie que le débit massique DEB_M, qui est le débit déterminé en fonction des mesures du débitmètre 5, est affecté par une panne. Dans ce cas, le débit massique WFM fourni est égal à Wf32_cor, c'est-à-dire le débit déterminé à partir de la position du tiroir du dispositif de dosage 3, éventuellement corrigé par la température et/ou la permittivité si ces mesures sont valides.

Les informations « température valide » ou « température invalide », « permittivité valide » ou « permittivité invalide » et « débit volumique valide » ou « débit volumique invalide » constituent des critère de validités des signaux de mesure fournis le débitmètre 5. Le traitement effectué par les modules 33 et 34 constitue une sélection d'un débit massique en fonction de ces critères de validité, au sens de l'invention.

En sélectionnant parmi les différents débits massiques précités, en fonction de critères de validité des mesures, le procédé de la figure 2 permet de déterminer un débit massique WFM qui est le plus précis possible, compte tenu d'éventuelles pannes pouvant affecter le débitmètre 5.

Enfin, le module 35 compare le débit massique WFM à la consigne de débit massique Wf32 pour déterminer un signal de commande POS de la position du tiroir du dispositif de dosage 3. Par exemple, le module 35 calcule la différence WFM - Wf32 et utilise un régulateur proportionnel-intégral.

Dans une variante, le procédé décrit précédemment en référence aux figures 2 et 3 est effectué pendant une phase stationnaire, c'est-à-dire pendant que le débit de carburant est sensiblement constant. Pendant une phase transitoire, pendant laquelle le débit de carburant varie, on peut sélectionner comme débit massique WFM le débit massique DEB_M, Wf32_T, Wf32_d, Wf32_d' ou Wf32_sel sélectionné pendant la phase stationnaire précédente. En effet, on peut considérer que le risque qu'une nouvelle panne apparaisse pendant la phase transitoire est minime. Le début et la fin d'une phase transitoire sont par exemple détectés en fonction des positions POSa et POSb.

Par ailleurs, quand une mesure est considérée invalide, elle peut de nouveau être considérée valide lorsqu'elle franchit un seuil de réhabilitation, par exemple égal ou fixé à 2/3 du seuil d'élimination ayant conduit à la considérer invalide.

## Revendications

1. Procédé de commande de la position d'un tiroir d'un dispositif de dosage (3) de carburant pour turbomachine en fonction d'une consigne de débit massique (Wf32), comprenant :
- une étape d'obtention d'un signal de position (POSa, POSb) provenant d'un capteur (4) apte à mesurer la position du tiroir,
- une étape d'obtention d'au moins un signal de mesure provenant d'un débitmètre (5) apte à mesurer un débit de carburant dans le dispositif de dosage (3),
- une étape d'estimation d'au moins un critère de validité dudit au moins un signal de mesure,
- une étape de détermination du débit massique (WFM) de carburant dans le dispositif de dosage, et
- une étape de commande de la position du tiroir en fonction du débit massique (WFM) déterminé et de la consigne de débit massique (Wf32), **caractérisé en ce que** :
- ledit au moins un signal de mesure comprend un premier et un deuxième signal de mesure de la température (Ta, Tb) du carburant, un premier et un deuxième signal de mesure de la permittivité (PERMa, PERMb) du carburant, et un premier et un deuxième signal de mesure du débit volumique (VOLa, VOLb) du carburant, et
- l'étape de détermination comprend la sélection, en fonction dudit au moins un critère de validité, d'un débit massique parmi :
- un débit massique (Wf32_sel) calculé en fonction du signal de position,
- un débit massique (Wf32_T) calculé en fonction du signal de position et d'au moins un desdits signaux de mesure de la température,
- un débit massique (Wf32_d') calculé en fonction du signal de position et d'au moins un desdits signaux de mesure de la permittivité,
- un débit massique (Wf32_d) calculé en fonction du signal de position, d'au moins un desdits signaux de mesure de la température et d'au moins un desdits signaux de mesure de la permittivité, et
- un débit massique (DEB_M) calculé en fonction d'au moins un desdits signaux de mesure de la température, d'au moins un desdits signaux de mesure de la permittivité, et d'au moins un desdits signaux de mesure du débit volumique.

2. Procédé de commande selon la revendication 1, dans lequel ledit au moins un critère de validité comprend un critère de validité d'une mesure de température, un critère de validité d'une mesure de permittivité, et un critère de validité d'une mesure de débit volumique.

3. Procédé de commande selon la revendication 2, dans lequel ledit au moins un critère de validité comprend en outre un critère secondaire de validité d'une mesure de débit volumique, estimé en comparant d'une part le débit massique (DEB_M) calculé en fonction d'au moins un desdits signaux de mesure de la température, d'au moins un desdits signaux de mesure de la permittivité, et d'au moins un desdits signaux de mesure du débit volumique et d'autre part le débit massique (Wf32_d) calculé en fonction du signal de position, d'au moins un desdits signaux de mesure de la température et d'au moins un desdits signaux de mesure de la permittivité.

4. Procédé de commande selon l'une des revendications 2 et 3, dans lequel le critère de validité d'une mesure de température est déterminé en comparant les premier et deuxième signaux de mesure de température (Ta, Tb) avec une plage de mesure de température, et le critère de validité d'une mesure de permittivité est déterminé en comparant les premier et deuxième signaux de mesure de permittivité (PERMa, PERMb) avec une plage de mesure de permittivité.

5. Procédé de commande selon la revendication 4, dans lequel le critère de validité d'une mesure de température et le critère de validité d'une mesure de permittivité sont déterminés en outre en fonction d'un ensemble de données représentant la densité d'un carburant en fonction d'une température et d'une permittivité.

6. Procédé de commande selon la revendication 5, dans lequel, lorsque la plage de mesure de température, respectivement de permittivité, et l'ensemble de données n'indiquent pas que les premier et deuxième signaux de mesure de température, respectivement de permittivité, sont invalides, le critère de validité d'une mesure de température, respectivement de permittivité, est déterminé en outre en fonction d'un écart entre le premier et le deuxième signal de mesure de température, respectivement de permittivité.

7. Procédé de commande selon l'une des revendications 2 à 6, dans lequel le critère de validité d'une mesure de débit volumique est déterminé en comparant les premier et deuxième signaux de mesure de débit volumique avec une plage de mesure de débit volumique.

8. Programme d'ordinateur comprenant des instructions pour l'exécution d'un procédé selon l'une des revendications 1 à 7 lorsque le programme est exécuté par un ordinateur.

9. Unité électronique (7) pour la commande d'une turbomachine, ladite unité électronique comprenant une mémoire (9) contenant un programme d'ordinateur selon la revendication 8.

10. Moteur d'aéronef comprenant une turbomachine et une unité électronique (7) selon la revendication 9.

## Patentansprüche

1. Verfahren zur Steuerung der Position eines Schiebers einer Vorrichtung zur Treibstoffdosierung (3) für eine Turbomaschine in Abhängigkeit von einem Massenstrom-Sollwert (Wf32), umfassend:
- einen Schritt zum Erhalten eines Positionssignals (POSa, POSb), das von einem Fühler (4) stammt, der geeignet ist, die Position des Schiebers zu messen,
- einen Schritt zum Erhalten wenigstens eines Messsignals, das von einem Durchflussmesser (5) stammt, der geeignet ist, einen Treibstoffdurchsatz in der Dosierungsvorrichtung (3) zu messen,
- einen Schritt zur Bewertung wenigstens eines Gültigkeitskriteriums des wenigstens einen Messsignals,
- einen Schritt zur Bestimmung des Treibstoffmassenstroms (WFM) in der Dosierungsvorrichtung, und
- einen Schritt zur Steuerung der Position des Schiebers in Abhängigkeit von dem bestimmten Massenstrom (WFM) und von dem Massenstrom-Sollwert (Wf32), **dadurch gekennzeichnet, dass**:
- das wenigstens eine Messsignal ein erstes und ein zweites Messsignal der Temperatur (Ta, Tb) des Treibstoffs, ein erstes und ein zweites Messsignal der Permittivität (PERMa, PERMb) des Treibstoffs sowie ein erstes und ein zweites Messsignal des Volumenstroms (VOLa, VOLb) des Treibstoffs umfasst, und
- der Bestimmungsschritt die Auswahl, in Abhängigkeit von dem wenigstens einen Gültigkeitskriterium, eines Massenstroms umfasst, aus:
- einem Massenstrom (Wf32_sel), der in Abhängigkeit von dem Positionssignal berechnet ist,
- einem Massenstrom (Wf32_T), der in Abhängigkeit von dem Positionssignal und von wenigstens einem der Messsignale der Temperatur berechnet ist,
- einem Massenstrom (Wf32_d'), der in Abhängigkeit von dem Positionssignal und von wenigstens einem der Messsignale der Permittivität berechnet ist,
- einem Massenstrom (Wf32_d), der in Abhängigkeit von dem Positionssignal, von wenigstens einem der Messsignale der Temperatur und von wenigstens einem der Messsignale der Permittivität berechnet ist, und
- einem Massenstrom (DEB_M), der in Abhängigkeit von wenigstens einem der Messsignale der Temperatur, von wenigstens einem der Messsignale der Permittivität und von wenigstens einem der Messsignale des Volumenstroms berechnet ist.

2. Steuerungsverfahren nach Anspruch 1, wobei das wenigstens eine Gültigkeitskriterium ein Gültigkeitskriterium einer Temperaturmessung, ein Gültigkeitskriterium einer Permittivitätsmessung und ein Gültigkeitskriterium einer Volumenstrommessung umfasst.

3. Steuerungsverfahren nach Anspruch 2, wobei das wenigstens eine Gültigkeitskriterium ferner ein sekundäres Gültigkeitskriterium einer Volumenstrommessung umfasst, das dadurch bewertet wird, dass einerseits der Massenstrom (DEB_M), der in Abhängigkeit von wenigstens einem der Messsignale der Temperatur, von wenigstens einem der Messsignale der Permittivität und von wenigstens einem der Messsignale des Volumenstroms berechnet ist, und andererseits der Massenstrom (Wf32_d), der in Abhängigkeit von dem Positionssignal, von wenigstens einem der Messsignale der Temperatur und von wenigstens einem der Messsignale der Permittivität berechnet ist, verglichen werden.

4. Steuerungsverfahren nach einem der Ansprüche 2 und 3, wobei das Gültigkeitskriterium einer Temperaturmessung dadurch bestimmt wird, dass das erste und das zweite Temperaturmesssignal (Ta, Tb) mit einem Temperaturmessbereich verglichen werden, und das Gültigkeitskriterium einer Permittivitätsmessung dadurch bestimmt wird, dass das erste und das zweite Permittivitätsmesssignal (PERMa, PERMb) mit einem Permittivitätsmessbereich verglichen werden.

5. Steuerungsverfahren nach Anspruch 4, wobei das Gültigkeitskriterium einer Temperaturmessung und das Gültigkeitskriterium einer Permittivitätsmessung ferner in Abhängigkeit von einem Satz von Daten, welche die Dichte eines Treibstoffes in Abhängigkeit von einer Temperatur und von einer Permittivität darstellen, bestimmt werden.

6. Steuerungsverfahren nach Anspruch 5, wobei dann, wenn der Temperatur- bzw. Permittivitätsmessbereich sowie der Datensatz nicht anzeigen, dass das erste und das zweite Temperatur- bzw. Permittivitätsmesssignal ungültig sind, das Gültigkeitskriterium einer Temperatur- bzw. Permittivitätsmessung ferner in Abhängigkeit von einer Abweichung zwischen dem ersten und dem zweiten Temperatur- bzw. Permittivitätsmesssignal bestimmt wird.

7. Steuerungsverfahren nach einem der Ansprüche 2 bis 6, wobei das Gültigkeitskriterium einer Volumenstrommessung dadurch bestimmt wird, dass das erste und das zweite Volumenstrommesssignal mit einem Volumenstrommessbereich verglichen werden.

8. Computerprogramm, umfassend Befehle für die Durchführung eines Verfahrens nach einem der Ansprüche 1 bis 7, wenn das Programm durch einen Computer ausgeführt wird.

9. Elektronische Einheit (7) für die Steuerung einer Turbomaschine, wobei die elektronische Einheit einen Speicher (9) umfasst, der ein Computerprogramm nach Anspruch 8 enthält.

10. Luftfahrzeugtriebwerk, umfassend eine Turbomaschine und eine elektronische Einheit (7) nach Anspruch 9.

## Claims

1. A method of controlling the position of a slide of a fuel metering device (3) for a turbine engine as a function of a weight flow rate setpoint (Wf32), the method comprising:
• a step of obtaining a position signal (POSa, POSb) coming from a sensor (4) suitable for measuring the position of the slide;
• a step of obtaining at least one measurement signal coming from a flow meter (5) suitable for measuring a fuel flow rate in the metering device (3);
• a step of estimating at least one validity criterion for said at least one measurement signal;
• a step of determining the fuel weight flow rate (WFM) through the metering device; and
• a step of controlling the position of the slide as a function of the determined weight flow rate (WFM) and of the weight flow rate setpoint (Wf32);
the method being **characterized in that**:
• said at least one measurement signal comprises first and second fuel temperature measurement signals (Ta, Tb), first and second fuel permittivity measurement signals (PERMa, PERMb), and first and second fuel volume flow rate measurement signals (VOLa, VOLb); and
• the determination step comprises acting as a function of said at least one validity criterion to select a weight flow rate from among:
• a weight flow rate (Wf32_sel) calculated as a function of the position signal;
• a weight flow rate (Wf32_T) calculated as a function of the position signal and of at least one of said temperature measurement signals;
• a weight flow rate (Wf32_d') calculated as a function of the position signal and of at least one of said permittivity measurement signals;
• a weight flow rate (Wf32_d) calculated as a function of the position signal, of at least one of said temperature measurement signals, and of at least one of said permittivity measurement signals; and
• a weight flow rate (DEB_M) calculated as a function of at least one of said temperature measurement signals, of at least one of said permittivity measurement signals, and of at least one of said volume flow rate measurement signals.

2. A control method according to claim 1, wherein said at least one validity criterion comprises a validity criterion for a temperature measurement, a validity criterion for a permittivity measurement, and a validity criterion for a volume flow rate measurement.

3. A control method according to claim 2, wherein said at least one validity criterion further comprises a secondary validity criterion for a volume flow rate measurement, estimated by comparing firstly the weight flow rate (DEB_M) calculated as a function of at least one of said temperature measurement signals, of at least one of said permittivity measurement signals, and of at least one of said volume flow rate measurement signals, and secondly the weight flow rate (Wf32_d) calculated as a function of the position signal, of at least one of said temperature measurement signals, and of at least one of said permittivity measurement signals.

4. A control method according to claim 2 or claim 3, wherein the validity criterion for a temperature measurement is determined by comparing the first and second temperature measurement signals (Ta, Tb) with a temperature measurement range, and the validity criterion for a permittivity measurement is determined by comparing the first and second permittivity measurement signals (PERMa, PERMb) with a permittivity measurement range.

5. A control method according to claim 4, wherein the validity criterion for a temperature measurement and the validity criterion for a permittivity measurement are also determined as a function of a data set representing the density of a fuel as a function of temperature and of permittivity.

6. A control method according to claim 5, wherein, when the temperature or permittivity measurement range and the data set do not indicate that the first and second temperature or permittivity measurement signals are invalid, then the validity criterion for a temperature or permittivity measurement is also determined as a function of the difference between the first and second temperature or permittivity measurement signals.

7. A control method according to any one of claims 2 to 6, wherein the validity criterion for a volume flow rate measurement is determined by comparing the first and second volume flow rate measurement signals with a volume flow rate measurement range.

8. A computer program including instructions for executing a method according to any one of claims 1 to 7 when the program is executed by a computer.

9. An electronic unit (7) for controlling a turbine engine, said electronic unit having a memory (9) containing a computer program according to claim 8.

10. An aeroengine comprising a gas turbine and an electronic unit (7) according to claim 9.
